# EUROPÄISCHE PATENTSCHRIFT

(11) **EP 1 028 826 B1**
(45) Veröffentlichungstag und Bekanntmachung des Hinweises auf die Patenterteilung: **20.03.2002**
(21) Anmeldenummer: 98944950.9
(22) Anmeldetag: 05.10.1998
(51) Int. Cl.: B23D 51/18, B25F 5/00

(54) **HANDWERKZEUG MIT EINEM LINEAR-SCHWINGANTRIEB**
HAND-HELD TOOL WITH A LINEAR OSCILLATING DRIVE
OUTIL A MAIN A ENTRAINEMENT OSCILLANT LINEAIRE

(30) Priorität: 21.10.1997 DE 19746447
(43) Veröffentlichungstag der Anmeldung: 23.08.2000
(73) Patentinhaber: Biax-Maschinen GmbH, 8266 Steckborn (CH)
(72) Erfinder: BOLLINGER, Heinrich, CH-8240 Thayngen (CH); KELLER, Max, CH-8200 Schaffhausen (CH)
(74) Vertreter: Münch, Otto, Dipl.-Ing.
(86) Internationale Anmeldenummer: CH9800424
(87) Internationale Veröffentlichungsnummer: WO9920424

(56) Entgegenhaltungen:
- DE-A- 3 212 701
- US-A- 3 241 459
- US-A- 4 864 727

## Beschreibung

Handwerkzeuge mit einem pneumatischen Linear-Schwingantrieb sind bekannt. Sie dienen zum Sägen, Schleifen, Polieren, Feilen und Schneiden von Werkstücken. Der Schwingantrieb umfasst einen im Handgriff verschiebbar gelagerten Kolben mit einer Kolbenstange, an deren freiem Ende ein Werkzeughalter befestigt ist. Der Kolben wird durch ein Flatterventil angetrieben, das einen Zylinderraum abwechselnd mit dem über ein handbetätigtes Schaltventil zugeführten Speisedruck und mit einem Abluftkanal verbindet.

Aus der EP-A-89 311 ist ein Schwingungstilger für ein solches Handwerkzeug bekannt. Eine Tilgermasse ist im Gehäuse in Längsrichtung verschiebbar gelagert und gegenüber dem Gehäuse mit Gummifedern abgestützt. Dieser Schwingungstilger vergrössert allerdings die Baulänge und er ist frequenzabhängig.

Aus der DE-OS 32 12 701 ist ausserdem ein Abbauhammer gemäss Oberbegriff des Anspruchs 1 bekannt. Der Hammer hat ein Werkzeuggehäuse mit einem Linear-Schwingantrieb. Dieser besteht aus einem im Werkzeuggehäuse in Längsrichtung verschiebbaren Motorengehäuse. Im Motorengehäuse ist in einer koaxialen Bohrung ein Kolben mit einer Kolbenstange eingesetzt, deren vorderes Ende auf ein im Werkzeuggehäuse verschiebbar gelagertes Werkzeug schlägt. Im Motorengehäuse ist ein Flatterventil eingesetzt. Das Flatterventil wird über einen das Motorengehäuse umgebenden Ringraum über ein Schaltventil mit Druckluft beaufschlagt. Es verbindet den Ringraum abwechselnd mit den beiden Zylinderräumen beidseits des Kolbens. Der Kolben öffnet abwechselnd die Verbindung der Zylinderräume zu einem Abluftkanal. Eine vorgespannte Druckfeder belastet das Motorengehäuse nach vorn. Diese Ausbildung erfordert einen relativ grossen Durchmesser des Werkzeuggehäuses. Der Kolben hat eine relativ kleine wirksame Fläche in Rückhubrichtung, da der Rückhub nur ein "Ausholen" für den nächsten Schlag ist und keine Arbeitsleistung abgegeben werden muss.

Der vorliegenden Erfindung liegt die Aufgabe zugrunde, ein Handwerkzeug der eingangs genannten Art anzugeben, das eine effiziente Vibrationsdämpfung bei kurzer Bauweise und kleinem Aussendurchmesser ermöglicht. Diese Aufgabe wird durch die Merkmalskombination des Anspruchs 1 gelöst. Bevorzugte Ausführungsformen sind in den abhängigen Ansprüchen umschrieben.

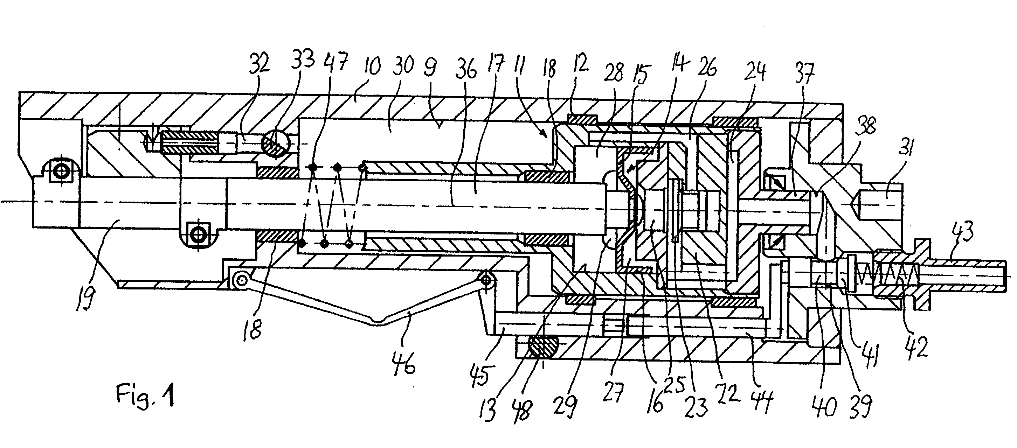

Nachfolgend wird ein Ausführungsbeispiel der Erfindung anhand der Zeichnung erläutert. Die einzige Figur zeigt einen Längsschnitt durch ein erfindungsgemässes Handwerkzeug.

In einer zylindrischen Bohrung 9 eines Griffkörpers 10 ist ein Motorengehäuse 11 auf PTFE-Ringen 12 verschiebbar gelagert. Das Gehäuse 11 hat eine koaxiale Bohrung 13, in der ein Kolben 14 hin- und herbeweglich ist. Der Kolbenboden 15 ist dünnwandig und bombiert und geht an seiner Peripherie in eine dünnwandige zylindrische Hülse 16 über. Der Kolben 14 ist mit einer koaxialen Kolbenstange 17 aus einer Aluminiumlegierung verbunden, welche eloxiert ist. In die Eloxalschicht ist PTFE eingelagert. Diese Bauweise von Kolben und Kolbenstange ergibt eine niedrige Masse dieser Teile. Damit werden auch die zu tilgenden Reaktionskräfte verringert. Die Kolbenstange 17 ist in zwei Gleitlagen 18 im Körper 10 und im Gehäuse 11 verschiebbar gelagert. Das hintere Gleitlager 18 dient gleichzeitig als Abdichtung des vorderen Zylinderraumes 28. Am vorderen Ende der Kolbenstange 17 ist ein Werkzeughalter 19 befestigt, der z.B. gemäss dem deutschen Patent Nr. 29 39 896 ausgebildet und gelagert sein kann.

Am hinteren Ende des Motorgehäuses 11 ist ein Ventilgehäuse 22 eingebaut mit einem an sich bekannten Flatterventil 23, welches im Betrieb einen Zuluftkanal 24 über Kanäle 25, 26 abwechselnd mit den beiden Zylinderräumen 27, 28 beidseits des Kolbens 14 verbindet. Die Abluft aus den Zylinderräumen 27, 28 wird abwechselnd über den Auspuffkanal 29 in den Raum 30 vor dem Gehäuse 11 und von diesem wiederum im Winkel versetzt über einen weiteren Kanal zu einer Austrittsöffnung 31 ausgestossen. Durch diese Ausbildung wird eine effiziente Schalldämpfung ohne Vergrösserung der Baulänge erreicht. Ausserdem werden durch die durchströmende Abluft die Gleitlager 18 der Kolbenstange 17 gekühlt. Vom Raum 30 zweigt ein Ausblaskanal 32 ab, der benachbart dem vorderen Ende der Kolbenstange 17 annähernd in deren Achsrichtung mündet. Der Kanal 32 kann mittels eines Drehschieberventils 33 verschlossen werden. Wenn das Werkzeug z.B. zum Sägen verwendet wird, können bei geöffnetem Ventil 33 die Sägespäne kontinuierlich weggeblasen werden. Die beschriebene Führung der Abluft hat also die dreifache Funktion der Schalldämpfung, der Kühlung und des Ausblasens.

Am Ventilgehäuse 22 ist koaxial zur Achse 36 der Kolbenstange 17 eine zylindrische Hülse 37 angeformt, welche abdichtend in einer Bohrung 38 des Körpers 10 geführt ist. Die Bohrung 38 ist mit dem Ventilraum 39 eines Sitzventils 40 verbunden. Der Ventilkörper 41 des Ventils 40 ist in Richtung der Achse 36 beweglich und durch eine Feder 42 in Schliessrichtung beaufschlagt. An den Druckluftanschluss 43 des Ventils 40 wird ein Schlauch angeschlossen. Der Ventilkörper 41 wird mit einer Stange 44 betätigt, welche im Körper 10 verschiebbar gelagert ist. Ein Schieber 45 drückt auf das vordere Stirnende der Stange 44. Am Schieber 45 ist das hintere Ende eines Kniehebel-Betätigungshebels 46 angelenkt, dessen vorderes Ende am Körper 10 angelenkt ist. Dieser Betätigungshebel 46 ist an einem verdünnten, vorderen Teil des Griffkörpers 10 vor dem Motorengehäuse 11 angeordnet. Dadurch wird eine schlanke Bauweise erreicht. Das Einschalten ist auch mit kleinen Händen ohne Nachgreifen möglich.

Der Speisedruck multipliziert mit dem Querschnitt der Bohrung 38 ergibt eine Kraft auf das Gehäuse 11, die durch eine Feder 47 kompensiert wird. Die Feder 47 ist zwischen Gehäuse 11 und Körper 10 eingespannt. Ihre Vorspannung ist so bemessen, dass bei eingeschalteter Druckluft das Gehäuse 11 annähernd in einer Stellung etwas hinter der Mittelstellung des maximalen Hubes des Gehäuses 11 im Körper 10 ist. Um ein unbeabsichtigtes Einschalten des Werkzeugs beim Ergreifen zu vermeiden, ist der Schieber 45 durch einen federbelasteten Querschieber 48 gesperrt, der manuell seitlich verschiebbar ist und eine Umfangsnut zur Freigabe des Schiebers 45 hat.

Im Betrieb wird zum Feilen oder Sägen der Hebel 46 gedrückt, so dass das Flatterventil 23 mit Druckluft beaufschlagt ist und der Kolben 14 hin- und herschwingt. Das Gehäuse 11 schwingt um 180° phasenverschoben, so dass die Reaktionskräfte zur Kolbenbewegung nahezu vollständig kompensiert werden. Der Schwerpunkt des Motorengehäuses 11 liegt auf der Achse 36, so dass auch keine oszillierenden Drehmomente entstehen. Damit wird ein ermüdungsfreies und genaues Arbeiten ermöglicht. Die Schwingungstilgung ist frequenzunabhängig.

Die beschriebene Lösung der auch zum Ausblasen geeigneten, als Schalldämpfer wirkenden Abluftführung und die beschriebene Ventilbetätigung mit einem Kniehebel-Betätigungshebel 46 können auch bei anderen Handwerkzeugen sinnvoll eingesetzt werden.

## Patentansprüche

1. Handwerkzeug mit einem Linear-Schwingantrieb, umfassend ein Werkzeuggehäuse, ein im Werkzeuggehäuse in Längsrichtung verschiebbar gelagertes Motorengehäuse (11), einen im Motorengehäuse (11) in einer ersten Bohrung (13) eingesetzten Kolben (14) mit einer Kolbenstange (17), deren vorderes Ende mit einem Werkzeug zusammenwirkt, ein im Motorengehäuse (11) in einem Ventilgehäuse (22) eingesetztes Flatterventil (23), welches den Ausgang eines Schaltventils (40) abwechselnd mit den beiden Zylinderräumen (27, 28) beidseits des Kolbens (14) verbindet, wobei der Kolben (14) abwechselnd die Verbindung zu einem Abluftkanal (29-31) öffnet, sowie eine vorgespannte Druckfeder (47) zwischen dem Werkzeuggehäuse und dem Motorengehäuse (11), **dadurch gekennzeichnet, dass** das Werkzeuggehäuse als Griffkörper (10) ausgebildet ist, dass vom Motorengehäuse (11) ein zylindrischer, rohrförmiger Stutzen (37) nach hinten absteht, der in einer zweiten Bohrung (38) des Griffkörpers (10) abdichtend und verschiebbar aufgenommen ist, wobei die zweite Bohrung (38) über das Schaltventil (40) mit Druckluft beaufschlagbar ist, dass der rohrförmige Stutzen (37) mit dem Flatterventil (23) verbunden ist, dass die Druckfeder (47) das Motorengehäuse (11) nach hinten vorbelastet, dass das Motorengehäuse (11) durch den Speisedruck entgegen der Kraft der Druckfeder (47) vorbelastet ist, dass die Kolbenstange (17) in einem Gleitlager (18) im Motorengehäuse (11) geführt ist, und dass das vordere Ende der Kolbenstange (17) zum Befestigen des Werkzeuges ausgebildet ist.

2. Werkzeug nach Anspruch 1, wobei vom Abluftkanal (29-31) ein nach vorn gerichteter, benachbart dem freien Ende der Kolbenstange (17) mündender, verschliessbarer Ausblaskanal (32) abzweigt.

3. Werkzeug nach Anspruch 1 oder 2, wobei die Kolbenstange (17) aus einer Aluminiumlegierung besteht.

4. Werkzeug nach Anspruch 3, wobei mindestens die Gleitflächen der Kolbenstange (17) eloxiert sind und die Eloxalschicht vorzugsweise PTFE enthält.

5. Werkzeug nach einem der Ansprüche 1 bis 4, wobei ein Betätigungshebel (46) des Schaltventils (40) in einem verdünnten vorderen Teil des Griffkörpers (10) vor dem Motorengehäuse (11) angeordnet ist.

6. Werkzeug nach Anspruch 5, wobei der Betätigungshebel (46) ein Kniehebel ist, dessen vorderes Ende am Griffkörper (10) und dessen hinteres Ende an einem Betätigungsgestänge (44, 45) des Schaltventils (40) angelenkt ist.

7. Werkzeug nach einem der Ansprüche 1 bis 6, wobei das Ventilglied des Schaltventils (40) in Längsrichtung des Griffkörpers (10) beweglich ist.

8. Werkzeug nach einem der Ansprüche 1 bis 7, wobei der Schwerpunkt des Motorengehäuses (11) annähernd auf der Achse (36) der Kolbenstange (17) liegt.

9. Werkzeug nach einem der Ansprüche 1 bis 8, wobei das Motorengehäuse (11) mittels PTFE-Ringen im Griffkörper (10) gelagert ist.

## Claims

1. Handtool with a linear vibrating drive, comprising a tool casing, a motor casing (11) which is mounted in such a manner that it can be displaced in the longitudinal direction in the tool casing, a piston (14) which is inserted into a first boring (13) in the motor casing (11) and has a piston rod (17), the front end of which interacts with a tool, a flutter valve (23), which is inserted in a valve casing (22) in the motor casing (11) and alternately connects the outlet of a pilot valve (40) to the two cylinder chambers (27, 28) on either side of the piston (14), the piston (14) alternately opening the connection to an exhaust air duct (29-31), and a prestressed compression spring (47) between the tool casing and the motor casing (11), **characterized in that** the tool casing is designed as a handle (10), **in that** a cylindrical, tubular connection piece (37) projects backwards from the motor casing (11), which connection piece is displaceably and sealingly accommodated in a second boring (38) in the handle (10), compressed air being supplied to the second boring (38) via the pilot valve (40), **in that** the tubular connection piece (37) is connected to the flutter valve (23), **in that** the compression spring (47) prestresses the motor casing (11) in a backwards direction, **in that** the motor casing (11) is prestressed by the feed pressure in the opposite direction to the force of the compression spring (47), **in that** the piston rod (17) is guided in a sliding-contact bearing (18) in the motor casing (11), and **in that** the front end of the piston rod (17) is designed for attachment of the tool.

2. Tool according to Claim 1, in which a closable blow-off duct (32), which is directed forwards and opens out next to the free end of the piston rod (17), branches off from the exhaust air duct (29-31).

3. Tool according to Claim 1 or 2, in which the piston rod (17) consists of an aluminium alloy.

4. Tool according to Claim 3, in which at least the sliding surfaces of the piston rod (17) are anodized and the anodized layer preferably contains PTFE.

5. Tool according to one of Claims 1 to 4, in which an actuating lever (46) of the pilot valve (40) is arranged in a narrowed front part of the handle (10), in front of the motor casing (11).

6. Tool according to Claim 5, in which the actuating lever (46) is a toggle, the front end of which is articulatedly mounted on the handle (10) and the rear end of which is articulatedly mounted on an actuating linkage (44, 45) of the pilot valve (40).

7. Tool according to one of Claims 1 to 6, in which the valve member of the pilot valve (40) can move in the longitudinal direction of the handle (10).

8. Tool according to one of Claims 1 to 7, in which the centre of gravity or the motor casing (11) lies approximately at the axis (36) of the piston rod (17).

9. Tool according to one of Claims 1 to 8, in which the motor casing (11) is mounted in the handle (10) by means of PTFE rings.

## Revendications

1. Outil à main avec un entraînement oscillant, comprenant un carter d'outil, un carter de moteur (11) logé dans le carter de l'outil, et lui permettant de se déplacer à l'intérieur de celui-ci en direction longitudinale, un piston (14) disposé dans un premier orifice (13) dans le carter du moteur (11), ce piston comportant une tige de piston (17) dont l'extrémité avant entraîne un outil, une soupape d'amortissement (23) disposée dans un carter de soupape (22) dans le carter de moteur (11), cette soupape faisant communiquer l'action d'un relais pneumatique (40) alternativement avec les chambres des cylindres (27,28) des deux côtés du piston (14), ce piston ouvrant à son tour la liaison avec un canal d'extraction d'air (29,31), ainsi qu'un ressort à compression (47) précontraint, entre le carter de l'outil et le carter du moteur (11), **caractérisé en ce que** le carter de l'outil a la forme d'une poignée (10), que, vers l'arrière du carter du moteur (11), dépasse un manchon cylindrique de forme tubulaire (37) s'emboîtant d'une façon mobile dans un deuxième perçage (38) de la poignée (10) en étanchant celui-ci, le deuxième orifice (38) pouvant être traversé par l'air comprimé, à travers le relais pneumatique (40), en sorte que le manchon cylindrique de forme tubulaire (37) est relié à la soupape d'amortissement (23), que le ressort à compression (47) exerce une précontrainte vers l'arrière sur le carter du moteur (11), que la pression d'alimentation exerce une précontrainte sur le carter du moteur (11) contre la force du ressort (47), que la tige de piston (7) est guidée dans un palier lisse (18) dans le carter du moteur (11), et que l'extrémité avant de la tige de piston (17) est conçue pour fixer l'outil.

2. Outil selon la revendication 1, dans lequel, à partir d'un canal d'extraction d'air (29,31), dérive un canal d'échappement (32) dirigé vers l'avant, obturable et débouchant au voisinage de l'extrémité libre de la tige de piston (17).

3. Outil selon la revendication 1 ou 2, dans lequel la tige de piston (17) est réalisée en alliage d'aluminium.

4. Outil selon la revendication 3, dans lequel les surfaces glissantes, au moins, celles de la tige de piston (17) sont anodisées, la couche d'anodisation contenant, si possible, du PTFE.

5. Outil selon l'une des revendications 1 à 4, dans lequel un levier de manoeuvre (46) du relais pneumatique (40) est disposé dans une partie avant, rétrécie de la poignée (10), avant le carter du moteur (11).

6. Outil selon la revendication 5, dans lequel le levier de manoeuvre (46) est une genouillère dont l'extrémité avant est articulée sur la poignée (10) et l'extrémité arrière sur une tige de manoeuvre (44, 45) du relais pneumatique (40).

7. Outil selon l'une des revendications 1 à 6, dans lequel la partie soupape du relais pneumatique (40) est mobile dans le sens longitudinal de la poignée (10).

8. Outil selon l'une des revendications 1 à 7, dans lequel le centre de gravité du carter du moteur (11) est voisin de l'axe (36) de la tige de piston (17).

9. Outil selon l'une des revendications 1 à 8, dans lequel le carter du moteur (11) est logé dans la poignée (10) au moyen de bagues en PTFE.
